(19) Europäisches Patentamt / European Patent Office / Office européen des brevets

(11) **EP 2 040 834 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**30.10.2019   Patentblatt 2019/44**

(45) Hinweis auf die Patenterteilung:
**29.08.2012   Patentblatt 2012/35**

(21) Anmeldenummer: **07764577.8**

(22) Anmeldetag: **06.06.2007**

(51) Int Cl.:
*B01J 23/38* (2006.01)   *B01J 37/02* (2006.01)
*B01D 53/94* (2006.01)   *F01N 3/28* (2006.01)
*B01J 21/06* (2006.01)   *B01J 23/22* (2006.01)
*B01J 23/30* (2006.01)   *B01J 23/72* (2006.01)
*B01J 23/745* (2006.01)   *B01J 29/00* (2006.01)
*B01J 29/064* (2006.01)   *B01J 35/00* (2006.01)

(86) Internationale Anmeldenummer:
**PCT/EP2007/005006**

(87) Internationale Veröffentlichungsnummer:
**WO 2008/006427 (17.01.2008 Gazette 2008/03)**

(54) **STRUKTURIERTER SCR-KATALYSATOR ZUR REDUKTION VON STICKOXIDEN IM ABGAS VON MAGERMOTOREN UNTER VERWENDUNG VON AMMONIAK ALS REDUKTIONSMITTEL**

TEXTURED SCR CATALYST FOR THE REDUCTION OF NITROGEN OXIDES FROM THE EXHAUST GASES OF A LEAN-MIXTURE ENGINE WITH THE USE OF AMMONIA AS REDUCING AGENT

CATALYSEUR SCR STRUCTURÉ POUR LA RÉDUCTION D'OXYDES D'AZOTE DANS LES GAZ D'ÉCHAPPEMENT DE MOTEURS À MÉLANGE PAUVRE UTILISANT L'AMMONIAC EN TANT QU'AGENT DE RÉDUCTION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.07.2006   DE 102006031724**
**25.09.2006   EP 06019975**

(43) Veröffentlichungstag der Anmeldung:
**01.04.2009   Patentblatt 2009/14**

(73) Patentinhaber: **Umicore AG & Co. KG**
**63457 Hanau-Wolfgang (DE)**

(72) Erfinder:
• **SOEGER, Nicola**
**61130 Nidderau (DE)**
• **MUSSMANN, Lothar**
**63069 Offenbach (DE)**
• **SESSELMANN, Ralf**
**63691 Ranstadt (DE)**
• **ADELMANN, Katja**
**64297 Darmstadt (DE)**
• **SCHNEIDER, Wolfgang**
**63517 Rodenbach (DE)**

(56) Entgegenhaltungen:
EP-A1- 1 736 232          EP-A2- 0 393 905
WO-A-97/02886             WO-A-2006/022214
WO-A1-00/29728            WO-A1-2005/082494
WO-A1-2007/137675         WO-A2-2006/031297
CA-A1- 2 652 837          JP-A- H0 796 183
US-A- 5 409 671           US-A- 5 409 671
US-A1- 2002 025 905

• Lu Gang et al: "Low temperature selective oxidation of ammonia to nitrogen on silver-based catalysts", Applied catalysis. B, Environmental, vol. 40, no. 2, 1 January 2003 (2003-01-01), pages 101-110, XP055203542, DOI: 10.1016/S0926-3373(02)00129-7
• Briscoe N.A. et al: "Some Aspects of the Synthesis, Characterisation and Properties of Zeolite Nu-2", Studies in Surface Science and Catalysis, vol. 49, 1989, pages 151-160,

**Beschreibung**

Die vorliegende Erfindung betrifft einen strukturierten Katalysator zur Entfernung von Stickoxiden aus Abgasen von überwiegend mit magerem Luft/Kraftstoffverhältnis betriebenen Verbrennungsmotoren durch selektive katalytische Reduktion unter Verwendung von Ammoniak oder einer zu Ammoniak zersetzlichen Verbindung als Reduktionsmittel. Bei solchen Verbrennungsmotoren handelt es sich um Dieselmotoren und direkteinspritzende Benzinmotoren. Sie werden zusammenfassend als Magermotoren bezeichnet.

Das Abgas von Magermotoren enthält neben den üblichen Schadgasen Kohlenmonoxid CO, Kohlenwasserstoffe HC und Stickoxide $NO_x$ einen relativ hohen Sauerstoffgehalt von bis zu 15 Vol.-%. Kohlenmonoxid und Kohlenwasserstoffe können durch Oxidation leicht unschädlich gemacht werden. Die Reduktion der Stickoxide zu Stickstoff ist wegen des hohen Sauerstoffgehaltes wesentlich schwieriger.

Ein bekanntes Verfahren zur Entfernung von Stickoxiden aus Abgasen in Gegenwart von Sauerstoff ist das Verfahren der selektiven katalytischen Reduktion (SCR-Verfahren; Selective Catalytic Reduction) mittels Ammoniak, das auch aus einer Vorläuferverbindung wie zum Beispiel Harnstoff in situ erzeugt werden kann. In diesem Verfahren erfolgt die Komproportionierung der Stickoxide mit Ammoniak unter Bildung von Stickstoff an einem geeigneten Katalysator, kurz als SCR-Katalysator bezeichnet.

Da Verbrennungsmotoren im Kraftfahrzeug in transienten Fahrzyklen betrieben werden, muß der SCR-Katalysator auch bei stark schwankenden Betriebsbedingungen möglichst hohe Stickoxidumsätze bei guter Selektivität gewährleisten. Dabei muß eine vollständige und selektive Stickoxid-Konvertierung bei niedrigen Temperaturen ebenso sichergestellt sein, wie der selektive und vollständige Umsatz hoher Stickoxidmengen, die beispielsweise bei Vollastfahrten auftreten, in sehr heißem Abgas. Zudem bereiten die stark schwankenden Betriebsbedingungen Schwierigkeiten bei der exakten Dosierung des Ammoniaks, die idealerweise in stöchiometrischem Verhältnis zu den zu reduzierenden Stickoxiden erfolgen sollte. Daraus ergeben sich hohe Anforderungen an die Robustheit des SCR-Katalysators, also an dessen Fähigkeit, Stickoxide in einem breiten Temperaturfenster bei hochvariablen Katalysatorbelastungen und schwankendem Reduktionsmittelangebot mit hohen Umsatz- und Selektivitätsraten zu Stickstoff reduzieren zu können.

EP 0 385 164 B1 beschreibt sogenannte Vollkatalysatoren zur selektiven Reduktion von Stickoxiden mit Ammoniak, die neben Titanoxid und mindestens einem Oxid von Wolfram, Silicium, Bor, Aluminium, Phosphor, Zirkonium, Barium, Yttrium, Lanthan und Cer eine zusätzliche Komponente enthalten, ausgewählt aus der Gruppe der Oxide von Vanadium, Niob, Molybdän, Eisen und Kupfer.

US 4,961,917 beansprucht Katalysatorformulierungen zur Reduktion von Stickoxiden mit Ammoniak, die neben Zeolithen mit einem Silica:Alumina-Verhältnis von mindestens 10 und einer Porenstruktur, die in allen Raumrichtungen durch Poren mit einem durchschnittlichen kinetischen Porendurchmesser von mindestens 7 Ångström verknüpft ist, Eisen und/oder Kupfer als Promotoren enthalten. EP 1 495 804 und US 6,914,026 zeigen Methoden zur Verbesserung der Stabilität solcher Zeolith-basierter Systeme unter hydrothermalen Alterungsbedingungen auf.

Die in den genannten Schriften beschriebenen SCR-Katalysatorformulierungen, die den gegenwärtigen Stand der Technik repräsentieren, haben gemeinsam, daß sie erst oberhalb von 350°C gute Stickoxid-Konversionsraten aufweisen. Die Umsetzung läuft in der Regel nur in einem relativ schmalen Temperaturbereich optimal ab. Dieses Umsatzoptimum ist für SCR-Katalysatoren typisch und liegt in der Arbeitsweise der Katalysatoren begründet.

Infolge der optimalen Stöchiometrie der Reaktion verläuft die Reduktion einer 1:1-molaren Mischung von Stickstoffmonoxid NO und Stickstoffdioxid $NO_2$ mit Ammoniak $NH_3$ um ein Vielfaches schneller als die Reduktion von reinem Stickstoffmonoxid NO. Die im Abgas von Magermotoren enthaltenen Stickoxide $NO_x$ bestehen überwiegend aus NO und weisen nur geringe Anteile $NO_2$ auf. Da die Oxidation von NO zu $NO_2$ bei Temperaturen unterhalb von 300°C jedoch durch einen Oxidationskatalysator kinetisch enthemmt werden muß, zeigen SCR-Katalysatoren im Tieftemperaturbereich keine signifikante Umsätze, wenn sie nicht über eine gewisse Oxidationskraft verfügen. Andererseits führt eine zu hohe Oxidationskraft bei Temperaturen oberhalb von 350°C dazu, daß Ammoniak durch den hohen Sauerstoffgehalt im Abgas von Magermotoren unter Bildung niedervalenter Stickoxide wie beispielsweise Lachgas $N_2O$ oxidiert wird. Dadurch geht einerseits das für die SCR-Reaktion benötigte Reduktionsmittel verloren, andererseits entsteht $NO_x$ in Form der unerwünschten Sekundäremission $N_2O$. Dies führt insgesamt zu einer deutlichen Begrenzung des Arbeitsfensters von Tieftemperatur-SCR-Katalysatoren auf einen sehr engen Temperaturbereich. Beispielsweise zeigen Edelmetall-haltige SCR-Katalysatoren sehr hohe $NO_x$-Konvertierungsraten zwischen 100 und 250°C, wobei der Temperaturbereich, in dem der Katalysator mit einer hinreichenden Selektivität zu Stickstoff arbeitet, in der Regel auf 20 bis 50° begrenzt ist.

Der Zielkonflikt zwischen zu hoher Oxidationskraft und infolgedessen mangelnder Selektivität einerseits und zu geringer Oxidationskraft und dadurch bedingt unzureichender Tieftemperaturaktivität andererseits ist Ursache dafür, daß zur Entfernung von Stickoxiden aus dem Abgas von Magermotoren SCR-Katalysatoren wie die in der EP 0 385 164 B1 oder der US 4,961,917 genannten Formulierungen entweder in Kombination mit einem vorgeschalteten Oxidationskatalysator oder/und in Kombination mit einem weiteren Stickoxide reduzierenden Katalysator eingesetzt werden müssen, um die Entfernung der Stickoxide bei allen im Fahrbetrieb auftretenden Arbeitstemperaturen, die zwischen 200°C und 600°C liegen, sicherstellen zu können. Bei dem ergänzenden, Stickoxide reduzierenden Katalysator kann es sich um einen Tieftemperatur-SCR-Katalysator, einen Stickoxid-Speicherkatalysator, einen HC-DeNOx-Katalysator oder eine andere geeignete, reduktionsaktive Katalysatortechnologie oder um Kombinationen davon handeln.

Beispielsweise offenbart die US 2006/0039843 eine entsprechende Systemlösung. In Absatz [0062] wird als vorteilhafte Ausführungsform ein System zur Abgasreinigung beschrieben, in dem ein mit einem SCR-Katalysator beschichtetes Substrat zwischen dem Reduktionsmittelinjektor und einem Katalysatorträger, der mit einem SCR-Katalysator und einem Ammoniak-Vernichtungskatalysator beschichtet ist, angeordnet wird. Die SCR-Katalysatorformulierungen werden den Angaben in dieser Schrift zufolge in einer bevorzugten Ausführungsform so gewählt, daß der erste Katalysator bei höheren Betriebstemperaturen optimal arbeitet, während sich der zweite Katalysator eher für den Einsatz in kühleren Segmenten des Abgassystems eignet.

WO 00/29728 offenbart ein Abgassystem zur Verminderung von $NO_x$-Emissionen im Abgas von Verbrennungsmotoren, insbesondere während der Aufwärmphase nach Kaltstart des Motors, das zwei in Strömungsrichtung nacheinander angeordnete SCR-Katalysatoren und ein Einspritzsystem für ein Reduktionsmittel umfaßt, das die Einspritzung des Reduktionsmittels signalgesteuert vor dem ersten Katalysator und/oder vor dem zweiten Katalysator ermöglicht. Die beiden eingesetzten SCR-Katalysatoren sind in unterschiedlichen Temperaturbereichen aktiv. Das Funktionsprinzip des Systems beruht darauf, daß die Einspritzung des Reduktionsmittels immer gezielt am Eintritt desjenigen Katalysators erfolgt, der in Relation zur herrscghenden Abgastemperatur gerade das geeignetste Umsatzprofil aufweist.

WO 2006/022214 offenbart ebenfalls ein Abgasreinigungssystem, das eine Hintereinanderschaltung von einem hochtemperaturaktiven SCR-Katalysator und einem tieftemperaturaktiven SCR.Katalysator umfasst. Als Reduktionsmittel wird wässrige Harnstofflösung zum Abgas hinzugegeben, die sich unter Umgebungstemperaturen unter Bildung von Ammoniak zersetzt. Als anströmseitiger, hochtemperaturaktiver Katalysator kommt ein Vanadium-basierter SCR-Katalysator zum Einsatz, als abströmseitig anzuordnender Tieftemperaturkatalysator dient ein Cu-, Fe-, Co- oder Ag-Zeolith-Katalysator oder ein Cu-, Fe-, Co- oder Ag-Alumina-Katalysator.

DE 103 60 955 A1 beschreibt eine Abgasreinigungsanlage für einen Verbrennungsmotor, in der in der SCR-Reaktion als Reduktionsmittel genutztes Ammoniak an einem in Strömungsrichtung ersten Katalysator aus entsprechenden Abgasbestandteilen erzeugt wird, wenn eine fette Abgaszusammensetzung vorliegt. An einem in Strömungsrichtung zweiten Katalysator wird das vom ersten Katalysator erzeugte Ammoniak bei fetter Abgaszusammensetzung zwischengespeichert. Bei magerer Abgaszusammensetzung werden die im Abgas enthaltenen Stickoxide unter Verwendung des zwischengespeicherten Ammoniaks reduziert. Hinter dem zweiten Katalysator ist ein dritter, Edelmetall-haltiger Katalysator angeordnet, der wenigstens eines der Platingruppenmetalle Pt, Pd oder Rh auf Trägermaterialien enthält, wobei die Trägermaterialien in der Lage sind, bei fetter Abgaszusammensetzung Ammoniak zu speichern und bei magerer Abgaszusammensetzung Ammoniak freizusetzen. Den Angaben dieser Schrift zufolge, ergänzen sich die Temperatur-Aktivitätsbereiche des in zweiter Position verwendeten Standard-SCR-Katalysators und des edelmetallhaltigen Katalysators, so daß es mit der vorgeschlagenen Abgasreinigungsanlage gelingt, den Stickoxid-Umsatz besonders bei tiefen Temperaturen erheblich zu steigern.

Solche Systemlösungen stellen zwar sicher, daß die im Abgas des Magermotors enthaltenen Stickoxide im transienten Betrieb des Motors weitestgehend entfernt werden. Sie weisen jedoch erhebliche Nachteile auf. So muß zunächst der Bauraum im Fahrzeug für alle geforderten Katalysatoren zur Verfügung gestellt werden. Weiterhin erzeugt jeder Katalysator einen meßbaren Abgasgegendruck, der zu Verlusten der zum Antrieb des Fahrzeugs verfügbaren Motorleistung und somit in letzter Konsequenz zu einem erhöhten Kraftstoffverbrauch führt. Außerdem erfordern solche Systemlösungen während der Entwicklungsphase eines Fahrzeugs aufwendige Untersuchungen zur Fahrzeugapplikation, mit denen sichergestellt werden muß, daß alle Katalysatoren in hinsichtlich Umsatz- und Selektivitätsverhalten optimaler Position angeordnet sind. Dabei wird die optimale Position der Katalysatoren maßgeblich durch die erreichbaren Betriebstemperaturen und somit zum einen durch die Entfernung zum Motor und zum anderen durch die Wärmeverluste in der Abgasanlage bestimmt. Selbstverständlich bedeutet jedes weitere Bauteil höhere Kosten.

Im Absatz [0021] der bereits erwähnten Schrift DE 103 60 955 wird vorgeschlagen, zur Minimierung des Druckverlustes den dritten, edelmetallhaltigen Katalysator auf eine abströmseitige Zone des zweiten Katalysators aufzubringen, wobei diese Zone 5 bis 50 % der Gesamtlänge L des zweiten Katalysators beträgt.

Die vorgeschlagene Lösung verringert die durch die Ausgestaltung als System verursachten Schwierigkeiten nur bedingt. Da es sich bei dem als abströmseitige Zone des zweiten Katalysators ausgeführten dritten Katalysator um einem edelmetallhaltigen Katalysator handelt und dieser infolge seiner hohen Oxidationskraft eine unzureichende Selektivität zu Stickstoff bei Temperaturen oberhalb von 250°C aufweist, sind oberhalb dieser Temperatur hohe $N_2O$-Sekundäremissionen zu erwarten.

EP-A-0 393 905 offenbart einen zonierten Metall-promotierten Zeolith-Katalysator und ein Verfahren zu dessen Verwendung in der selektiven katalytischen Reduktion von Stickoxiden mit Ammoniak. Demzufolge wird ein Stickoxide und Ammoniak enthaltender Abgasstrom zunächst durch eine erste katalytisch aktive Zone geleitet, die einen ersten Zeolith-Katalysator enthält, der gegebenenfalls mit nicht mehr als 1 Gew.-% Eisen und/oder Kupfer (berechnet als Metall und bezogen auf die Summe aus Metall und Zeolith) promotiert ist. Dies erfolgt unter Bedingungen, zu denen Stickoxide mit Ammoniak reduziert werden können, wobei Rest-Ammoniak verbleibt. Der nach dem Durchleiten durch die erste katalytisch aktive Zone resultierende, $NO_x$-abgereicherte Abgasstrom, der Rest-Ammoniak enthält, wird dann durch eine zweite katalytisch aktive Zone geleitet, die einen zweiten Zeolith-Katalysator enthält, welcher mit mehr als 1 Gew.-% Eisen und/oder Kupfer (berechnet als Metall und bezogen auf die Summe aus Metall und Zeolith) promotiert ist. Dies erfolgt in Gegenwart von Sauerstoff und unter Bedingungen, die wirksam sind, um Ammoniak zu Stickstoff zu oxidieren und einen Ammoniak-abgereicherten Gasstrom auszuscheiden.

US 5,409,671 offenbart einen Katalysator zur Behandlung von Abgasen, der zwei übereinander angeordnete katalytisch aktive Schichten aufweist. Die erste auf einem Grundmaterial (Tragkörper) aufgebrachte Schicht enthält ein mit Übergangsmetallionen ausgetauschtes Silikat und ein auf diesem Silikat aufgebrachtes Edelmetall. Die zweite Schicht, die auf die das Grundmaterial überdeckende Schicht aufgebracht ist, ist zusammengesetzt aus einem Metall-ausgetauschten Silikat und einem weiteren, darauf geträgerten Metall, welches $O_2$-spillover-Effekte aufweist. Dieses Metall ist ausgewählt aus der Gruppe bestehend aus Zr, Co, Cu, Cr, Mn, Y, Fe, Ni, V, Ti, Zn, Ga, Ba, Mg, La, Ce, Pr, Nd, Sm und Tb.

Aufgabe der vorliegenden Erfindung ist es nun, einen Katalysator zur selektiven katalytischen Reduktion von Stickoxiden mit Ammoniak oder einer zu Ammoniak zersetzlichen Verbindung zur Verfügung zu stellen, der eine gute SCR-Aktivität im Temperaturbereich unterhalb von 350°C aufweist, wobei die gewohnte SCR-Aktivität und Selektivität im Temperaturbereich oberhalb von 350°C möglichst vollständig erhalten bleibt. Insbesondere ist es Aufgabe der vorliegenden Erfindung, ein katalytisch aktives Bauteil zur Verfügung zu stellen, daß trotz einer Erweiterung des Aktivitätsfensters in den Tieftemperaturbereich hinein keine signifikant erhöhten $N_2O$-Sekundäremissionen verursacht.

Diese Aufgabe wird gelöst durch einen strukturierten SCR-Katalysator zur Reduktion von Stickoxiden im mageren Abgas von Verbrennungsmotoren unter Verwendung von Ammoniak oder einer zu Ammoniak zersetzlichen Verbindung als Reduktionsmittel, der sich zusammensetzt aus mehreren katalytisch aktiven Materialzonen, die auf einem gegebenenfalls katalytisch inerten Tragkörper aufgebracht sind und welche vom Abgas zeitlich nacheinander kontaktiert werden, wobei die Materialzonen übereinander angeordnet sind und wobei die obere Schicht die vom zu reinigenden Abgas zuerst kontaktierte Materialzone ist und wobei sich die Materialzonen durch verschiedene Umsatzprofile der SCR-Reaktion auszeichnen, wobei das Umsatzprofil der vom zu reinigenden Abgas zuerst kontaktierten Materialzone bei höheren Temperaturen liegt als das Umsatzprofil der vom zu reinigenden Abgas nachgeordnet kontaktierten Materialzone, dadurch gekennzeichnet, daß die vom zu reinigenden Abgas zuerst kontaktierte Zone aus Eisen-ausgetauschten Zeolithen besteht und die vom zu reinigenden Abgas nachgeordnet kontaktierte Materialzone einen Übergangsmetall-ausgetauschten Zeolithen enthält und das im Zeolithen enthaltene Übergangsmetall Kupfer ist und

dadurch gekennzeichnet,

dass er kein Platingruppenmetall enthält und

wobei das Umsatzprofil das optimale Arbeitstemperaturfenster eines SCR-Katalysators in frisch hergestelltem Zustand bezeichnet und eine untere Temperaturgrenze und eine obere Temperaturgrenze aufweist,

wobei die untere Temperaturgrenze die Temperatur ist, bei der 50% der für den Katalysator charakteristischen Maximalkonvertierung erreicht werden und die obere Temperaturgrenze die Temperatur ist, bei der 90% der für den Katalysator charakteristischen Maximalkonvertierung unterschritten werden, wobei das Umsatzprofil eingeschränkt ist, wenn der nach Katalysator gemessene $N_2O$-Gehalt eine kritische Grenze überschreitet, die 25ppm beträgt,

wobei die Umsatzprofile der SCR-Reaktion der Materialzonen bestimmt sind in einem stationären Test an einer Modellgasanlage mit folgenden Gaskonzentrationen

| Modellgaskomponente: | Konzentration |
|---|---|
| NO | 500 ppm |
| $NH_3$ | 425 ppm |
| $O_2$ | 5 Vol% |
| $H_2O$ | 1.3 Vol% |
| N2 | Rest |

einem Alpha-Wert (Molverhältnis von Ammoniak zu den Stickoxiden) von $\alpha$ = 0,85 und einer Raumgeschwindigkeit von 30.000 $h^{-1}$ und

wobei das Umsatzprofil der zuerst vom Abgas kontaktierten Materialzone zwischen 350°C und 500°C und das Umsatzprofil der vom Abgas nachgeordnet kontaktierten Materialzone zwischen 200°C und 350°C liegt.

Vor einer eingehenden Erläuterung der Erfindung werden im folgenden einige Begriffe definiert, die für die Erfindung von Bedeutung sind.

Unter Umsatzprofil eines Katalysators im Sinne dieser Patentschrift wird das optimale Arbeitstemperaturfenster eines SCR-Katalysators im frisch hergestellten Zustand verstanden, also der Temperaturbereich, in dem maximale Stickoxidkonvertierungen bei einer Mindestanforderung an die Selektivität des Katalysators erreicht werden. Die Festlegung der Begrenzungen dieses Temperaturbereiches erfolgt mit Hilfe zweier temperaturabhängiger Umsatzwerte, die sich an der unter den gewählten Betriebsbedingungen gemessenen Maximalkonvertierung des frisch hergestellten Katalysators bemessen. Im unteren Temperaturbereich ist das Anspringverhalten des Katalysators und seine Oxidationskraft leistungsbestimmend. In Analogie zu der zur Charakterisierung von Oxidationskatalysatoren üblichen und dem Fachmann gut bekannten Terminologie des "Light-Off-Verhaltens" wird als untere Grenze des Umsatzprofils ein $T_{50}$-Wert festgelegt. Dies ist die Temperatur, bei der unter den gewählten Betriebsbedingungen 50 % der für den Katalysator charakteristischen Maximalkonvertierung erreicht werden. Im oberen Temperaturbereich wird der Umsatz vor allem durch die aus der Überoxidation von Ammoniak resultierende Bildung von Stickoxiden limitiert. Als obere Grenze des Umsatzprofils wird die Temperatur gewählt, bei der 90 % der für den Katalysator unter den gewählten Betriebsbedingungen charakteristischen Maximalkonvertierung unterschritten werden. Im Hinblick auf die hohen Selektivitätsanforderungen und unter Berücksichtigung der Tatsache, daß das aus der Überoxidation von Ammoniak entstehende Lachgas $N_2O$ eine unerwünschte Sekundäremission darstellt, wird der als Umsatzprofil definierte Temperaturbereich weiter eingeschränkt, wenn der nach Katalysator gemessene $N_2O$-Gehalt eine kritische Grenze überschreitet. Bei den von der Anmelderin durchgeführten Untersuchungen gilt ein maximaler Wert von 25 ppm als unter den gewählten Betriebsbedingungen akzeptabel.

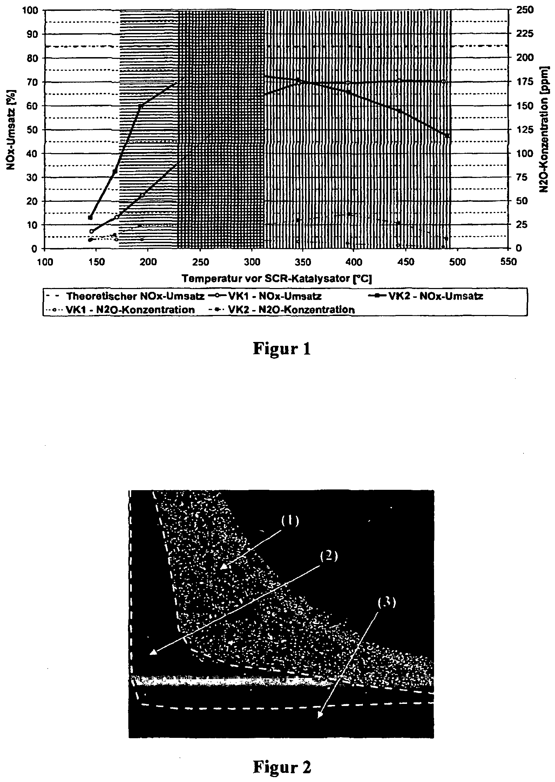

Zur Veranschaulichung sind in Figur 1 die Umsatzprofile zweier konventioneller SCR-Katalysatoren dargestellt, die in den beiden Vergleichsbeispielen beschrieben werden. Das Umsatzprofil von VK1 ist durch die mit (|||) gekennzeichnete Fläche kenntlich gemacht und umfaßt den Temperaturbereich 225°C bis > 500°C. Das Umsatzprofil von VK2, dargestellt durch die mit ($\equiv$) gekennzeichnete Fläche, wird an der oberen Grenze durch einen auf über 25 ppm ansteigenden $N_2O$-Gehalt nach Katalysator begrenzt und umfaßt den Temperaturbereich 175°C bis 310°C

Unter katalytisch aktiver Materialzone im Sinne dieser Patentschrift wird ein im Katalysator enthaltener und im Rasterelektronenmikroskop als geschlossene Zone sichtbarer Materialbereich verstanden. Dabei kann es sich um die katalytisch aktive Beschichtung eines inerten Tragkörpers handeln. Diese Beschichtung kann ihrerseits aus mehreren katalytisch aktiven Materialzonen aufgebaut sein, wenn sie beispielsweise aus mehreren Schichten unterschiedlichen Materials besteht. Zum besseren Verständnis des Begriffes der Materialzone zeigt Figur 2 den Ausschnitt aus einer Rasterelektronenmikroskopaufnahme der angeströmten Querschnittsfläche eines Katalysators, der aus einem inerten Wabenkörper mit katalytisch aktiver Beschichtung besteht. Die Bezugsziffer (3) bezeichnet den als inerten Tragkörper verwendeten Wabenkörper. Die Bezugsziffern (1) und (2) zeigen die verschiedenen katalytisch aktiven Materialzonen, aus denen die Beschichtung zusammengesetzt ist. Die eingezeichneten gestrichelten Hilfslinien verdeutlichen die Abgrenzungen der Materialzonen zueinander.

Weiterhin wird unter einer Materialzone ein Tragkörper verstanden, auf dem eine Beschichtung bestehend aus einer oder gegebenenfalls mehreren Materialzonen aufgebracht sein kann, vorausgesetzt, daß der Träger selbst katalytische Aktivität in der SCR-Reaktion zeigt.

Der erfindungsgemäße strukturierte SCR-Katalysator setzt sich aus mehreren katalytisch aktiven Materialzonen zusammen, wobei das Umsatzprofil der zuerst vom zu reinigenden Abgas kontaktierten Materialzone bei höheren Temperaturen liegt als das Umsatzprofil der vom zu reinigenden Abgas nachgeordnet kontaktierten Materialzone.

Das Umsatzprofil der zuerst vom Abgas kontaktierten Materialzone liegt zwischen 350°C und 500°C. Ein solches Umsatzprofil ist für SCR-Katalysatoren, die Eisen-ausgetauschte Zeolithe enthalten, typisch. Das Umsatzprofil der vom Abgas nachgeordnet kontaktierten Materialzone liegt im Temperaturbereich zwischen 200°C und 350°C.

Eine solche Anordnung der durch ihr Umsatzprofil gekennzeichneten Materialzonen gewährleistet einen deutlichen Anstieg des Stickoxid-Umsatzes im Temperaturbereich unterhalb von 350°C, ohne daß es im Temperaturbereich oberhalb von 350°C zu nennenswerten Störungen der Selektivität durch eine Überoxidation von Ammoniak zu niedervalenten Stickoxiden kommt. Infolgedessen kann das für den SCR-Katalysator typische Umsatzprofil additiv um einen signifikanten Temperaturbereich unterhalb von 350°C verbreitert werden. Die additive Verbreiterung des Umsatzprofils des erfindungsgemäßen Katalysators resultiert vermutlich daher, daß je nach Betriebstemperatur des Katalysators jeweils eine der Materialzonen nicht signifikant zum Stickoxid-Umsatz beiträgt, gleichzeitig aber auch nicht Selektivitätszerstörend wirkt, sondern sich quasi inert verhält.

Die Anordnung der Materialzonen mit der erfindungsgemäßen Zusammensetzung ist nicht beliebig. Die umgekehrte Anordnung der Materialzonen, in der das zu reinigende Abgas zuerst die Materialzone mit Umsatzprofil bei tieferen Temperaturen kontaktiert, ist nicht zielführend, da die erzielbaren Umsatzraten im Vergleich zur erfindungsgemäßen Anordnung deutlich abnehmen.

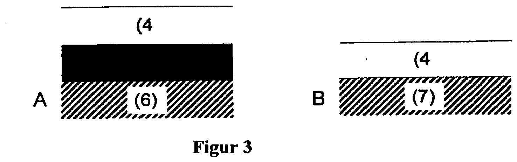

Figur 3 zeigt erfindungsgemäße Ausführungsformen mit einer Anordnung der Materialzonen übereinander (vertikal). Die Bezugsziffer (4) bezeichnet die vom Abgas zuerst kontaktierte Materialzone mit Umsatzprofil bei höheren Temperaturen. Die Bezugsziffern (5) und (7) bezeichnen vom Abgas nachgeordnet kontaktierte Materialzonen mit Umsatzprofil bei niedrigeren Temperaturen, wobei Bezugsziffer (7) nur für den Spezialfall verwendet wird, daß die nachgeordnet kontaktierte Materialzone einen in der SCR-Reaktion katalytisch aktiven Tragkörper darstellt. Bezugsziffer (6) bezeichnet einen inerten Tragkörper.

Vertikale Anordnungen wie in Figur 3B eignen sich immer dann, wenn als vom Abgas nachgeordnet zu kontaktierende Materialzone (7) Vollkatalysatoren mit Umsatzprofil bei niedrigeren Temperaturen eingesetzt werden, die gleichzeitig als Tragkörper für eine weitere katalytisch aktive Beschichtung mit Umsatzprofil bei höheren Temperaturen (4) dienen. Alternativ kann ein inerter Tragkörper (6) zunächst mit einer katalytisch aktiven Beschichtung mit einem Umsatzprofil bei niedrigeren Temperaturen (5) beschichtet werden und der so entstehende "Tieftemperatur-SCR-Katalysator" als Tragkörper für eine katalytisch aktive Beschichtung, die bei höheren Temperaturen gute SCR-Aktivität und -Selektivität zeigt (4), verwendet werden. Dadurch entsteht die in Figur 3A dargestellte Ausführungsform.

Bei der Wahl der bevorzugten räumlichen Anordnung der Schichten sind auch applikative Aspekte zu berücksichtigen. Bei einer Anordnung der Schichten vertikal übereinander gemäß den Figuren 3A oder 3B ist zu bedenken, daß bei hohen Temperaturen negative Wechselwirkungen zwischen den Materialzonen nicht ausgeschlossen werden können. Beispielsweise kann durch thermisch induzierte Wanderungen von Übergangsmetallatomen aus (5) bzw. (7) in (4) hinein die Selektivität des Systems gestört werden, da eine solche Ionenwanderung zu einer unerwünschten Erhöhung der Oxidationskraft der vom Abgas zuerst kontaktierten Materialzone mit der Folge einer erhöhten Überoxidationsrate von Ammoniak bei höheren Betriebstemperaturen führt.

Eine Möglichkeit, dies zu verhindern, ist die Anordnung einer weiteren Beschichtung zwischen den Materialzonen (5) und (4) bzw. (7) und (4), die gegenüber den Übergangsmetallatomem als Diffusionsbarriere wirkt. Die Wirkung einer solchen Diffusionsbarriere kann je nach eingesetztem Material und je nach Reinigungsaufgabe eines strukturierten Autoabgaskatalysators auf einer mechanischen oder auf einer chemischen Sperrwirkung beruhen. Bevorzugt werden Diffusionsbarrieren mit chemischer Sperrwirkung.

In einer besonders bevorzugten Ausführungsform der vorliegenden Erfindung wird zwischen den vertikal übereinander angeordneten Materialzonen (5) und (4) bzw. (7) und (4) (Figuren 3A bzw. 3B) eine Diffusionsbarriere mit chemischer Sperrwirkung, die überwiegend nicht ausgetauschte Zeolithe, sogenannte H-Zeolithe, und/oder Ammoniumausgetauschte Zeolithe enthält, angeordnet. Die Wirkung von H-Zeolithen beruht darauf, daß Übergangsmetallatome, die thermisch induziert aus einer katalytisch aktiven Beschichtung heraus in die zeolithische Sperrschicht wandern, in den Poren des Zeolithen chemisch gebunden werden. Dazu erfolgt ein Ionenaustausch im Festkörper, der zur Freisetzung der schneller wandernden, kleineren Protonen führt. Die Übergangsmetallatome werden an den Adsorptionplätzen der Protonen chemisch fest gebunden. Ihre Wanderung wird so zunächst gestoppt. Erst wenn alle Protonenadsorptionsplätze in der zeolithischen Sperrschicht mit dem Übergangsmetall ausgetauscht wurden und durch weitere Wanderungen in die Sperrschicht hinein eine Anreicherung an der Grenzfläche zur benachbarten katalytisch aktiven Schicht erfolgt und die Schwellenkonzentration überschritten wird, verliert die Diffusionsbarriere ihre Wirksamkeit. Diesem Punkt kann durch eine auf die Konzentration der Übergangsmetallatome in der katalytisch aktiven Beschichtung angepaßte Dimensionierung der Diffusionsbarriere vorgebeugt werden.

Wandern Übergangsmetallatome aus den benachbarten katalytisch aktiven Beschichtungen in eine Sperrschicht aus Ammonium-ausgetauschtem Zeolithen hinein, so wird neben Protonen Ammoniak freigesetzt. Dieses wird in der Käfigstruktur des Zeolithen zunächst zwischengespeichert und kann zur Reduktion von Stickoxiden in der selektiven katalytischen Reduktion verwendet werden. Weiterhin können sowohl in der Käfigstruktur von H-Zeolithen als auch in der Käfigstruktur von Ammoniumausgetauschten Zeolithen Kohlenwasserstoffmoleküle aus dem Abgas zwischengespeichert werden. Diese stehen dann ebenfalls als Reduktionsmittel zur Verfügung.

Die Erfindung wird im folgenden an Hand von zwei Vergleichsbeispielen, einem Beispiel und den Figuren 1 bis 5 näher erläutert. Es zeigen

**Figur 1:** Umsatzprofile zweier konventioneller SCR-Katalysatoren.
**Figur 2:** Ausschnitt aus einer Rasterelektronenmikroskopaufnahme des Querschnittes durch einen inerten Wabenkörper (3) mit aufgebrachter Beschichtung bestehend aus zwei Materialzonen (1) und (2).
**Figur 3:** Bezüglich der räumlichen Anordnung der Materialzonen verschiedene bevorzugte Ausführungsformen der erfindungsgemäßen strukturierten SCR-Katalysatoren. Hierin bezeichnen die Bezugsziffern

(4) die vom Abgas zuerst kontaktierte Materialzone mit Umsatzprofil bei höheren Temperaturen.

(5) die vom Abgas nachgeordnet kontaktierte Materialzone mit Umsatzprofil bei niedrigeren Temperaturen, wenn es sich nicht um einen in der SCR-Reaktion katalytisch aktiven Tragkörper handelt.

(6) einen inerten Tragkörper.

(7) einen in der SCR-Reaktion katalytisch aktiven Tragkörper als vom Abgas nachgeordnet kontaktierte Materialzone mit Umsatzprofil bei niedrigeren Temperaturen.

Figur 3 hat bezüglich der dargestellten Ausführungsformen der erfindungsgemäßen Katalysatoren weder umfassenden noch ausschließlichen Charakter. Die Darstellung ist beispielhaft.

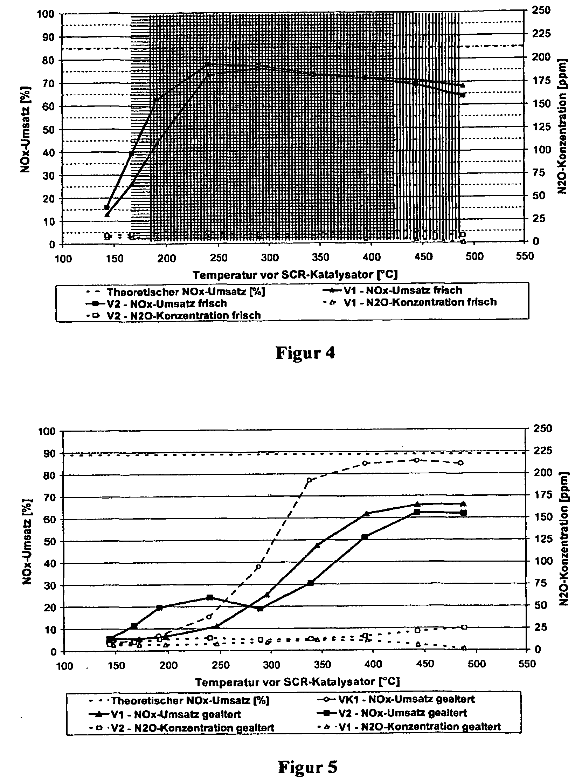

**Figur 4:** Umsatzprofile zweier frisch hergestellter erfindungsgemäßer strukturierter SCR-Katalysatoren mit vertikaler Anordnung der Materialzonen.

**Figur 5:** Stickoxid-Umsätze zweier erfindungsgemäßer strukturierter SCR-Katalysatoren mit vertikaler Anordnung der Materialzonen und eines herkömmlichen SCR-Katalysators nach hydrothermaler Alterung.

**Vergleichsbeispiel 1:**

In diesem Vergleichsbeispiel wurde das Umsatzprofil eines konventionellen SCR-Katalysators auf der Basis Eisen ausgetauschter Zeolithe untersucht. Solche Katalysatoren zeigen typischerweise ein Umsatzprofil mit Maximalumsätzen bei Temperaturen oberhalb von 300°C. Zur Herstellung dieses Vergleichskatalysators, der im Folgenden als VK 1 bezeichnet wird, wurden 6,4 g einer aus mit Eisen ausgetauschten Zeolithen bestehenden katalytisch aktiven Beschichtung auf einen inerten keramischen Wabenkörper aufgebracht. Das Volumen des Wabenkörpers betrug 0,041. Er besaß 62 Zellen pro $cm^2$ mit einer Wandstärke von 0,17 mm.

Die Untersuchung der Umsatzprofils erfolgte in einem stationären Test an einer Modellgasanlage mit folgenden Gaskonzentrationen:

| Modellgaskomponente: | Konzentration: |
| --- | --- |
| NO | 500 ppm |
| $NH_3$ | 425 ppm |
| $O_2$ | 5 Vol% |
| $H_2O$ | 1,3 Vol% |
| $N_2$ | Rest |

Das Molverhältnis von Ammoniak zu den Stickoxiden wird bei Untersuchungen der SCR-Aktivität gewöhnlich mit Alpha bezeichnet:

$$\alpha = \frac{c(NH_3)}{c(NOx)}$$

Aus den in der Tabelle aufgeführten Gaskonzentrationen ergibt sich ein Alpha-Wert von $\alpha = 0{,}85$. Die Raumgeschwindigkeit in den durchgeführten Modellgastests betrug 30.000 $h^{-1}$.

Das Ergebnis der Untersuchungen ist in Figur 1 dargestellt. Hierin zeigen die mit (○) gekennzeichneten Kurven die Ergebnisse für VK1. Der Katalysator erreicht in frisch hergestelltem Zustand einen Stickoxid-Maximalumsatz von 70 % bei Temperaturen zwischen 350°C und 500°C. Da bei 500°C noch keine Degradation des Umsatzes zu beobachten ist, kann angenommen werden, daß das Umsatzniveau von ca. 70 % auch bei höheren Temperaturen gehalten werden kann. Unterhalb von 350°C steigen die Umsätze langsam und nahezu linear mit der Temperatur an. $T_{50}$ liegt bei 225°C. Der durch Überoxidation von Ammoniak entstehende $N_2O$-Gehalt nach Katalysator liegt im gesamten Temperaturfenster unterhalb von 10 ppm ist ist somit für die Festlegung des Umsatzprofils nicht relevant.

Demzufolge umfaßt das für VK1 typische Umsatzprofil im Sinne dieser Patentschrift den mit (|||) gekennzeichneten Temperaturbereich von 225°C bis >500°C.

**Vergleichsbeispiel 2:**

In diesem Vergleichsbeispiel wurde das Umsatzprofil eines konventionellen SCR-Katalysators auf der Basis Kupfer ausgetauschter Zeolithe untersucht. Solche Katalysatoren zeigen nach Erfahrungen der Anmelderin aufgrund der höheren Oxidationswirkung des Kupfers in der Regel ein Umsatzprofil bei Temperaturen unterhalb von 350°C. Zur Herstellung dieses Vergleichskatalysators, der im Folgenden als VK 2 bezeichnet wird, wurden 10 g einer aus mit Kupfer ausgetauschten Zeolithen bestehenden katalytisch aktiven Beschichtung auf einen inerten keramischen Wabenkörper aufgebracht. Das Volumen des Wabenkörpers betrug ebenfalls 0,04 1. Er besaß 62 Zellen pro $cm^2$ mit einer Wandstärke von 0,17 mm.

Die Untersuchung erfolgte in einem stationären Test an einer Modellgasanlage unter denselben Bedingungen wie in Vergleichsbeispiel 1.

Das Ergebnis der Untersuchungen ist in Figur 1 dargestellt. Hierin zeigen die mit (■) gekennzeichneten Kurven die Ergebnisse für VK2. Der Katalysator erreicht in frisch hergestelltem Zustand nach Durchschreiten des $T_{50}$-Wertes bei 175°C einen Stickoxid-Maximalumsatz von 74 % bei 240°C. Oberhalb von 350°C fallen die beobachteten Stickoxidumsätze deutlich ab und unterschreiten ab 380°C Werte von 66 %. Bereits bei tieferen Temperatur steigen die aus der Überoxidation von Ammoniak resultierenden $N_2O$-Konzentrationen auf über 25 ppm an.

Dementsprechend umfaßt das für VK2 typische Umsatzprofil im Sinne dieser Patentschrift den mit (≡) gekennzeichneten Temperaturbereich von 175°C bis 310°C.

Figur 1 zeigt sehr deutlich die für konventionelle SCR-Katalysatoren typische Einschränkung des Arbeitsbereiches, die durch den Zielkonflikt zwischen der mindestens erforderlichen Oxidationskraft zur effektiven Voroxidation von NO zu $NO_2$ einerseits und der maximal nutzbaren Oxidationskraft, die gerade noch zulässig ist, um eine Überoxidation des als Reduktionsmittel eingesetzten Ammoniak zu verhindern, andererseits, zustande kommt.

**Beispiel 1:**

Untersucht wurden Umsatzprofil und Alterungsverhalten zweier erfindungsgemäßer strukturierter SCR-Katalysatoren mit vertikaler Materialzonenanordnung. Zur Herstellung der Katalysatoren wurde eine aus zwei Materialzonen bestehende katalytisch aktive Beschichtung auf einen inerten keramischen Wabenkörper aufgebracht. Hierzu wurde der Wabenkörper zunächst mit einer Materialzone aus einem mit Kupfer ausgetauschten Zeolithen entsprechend Katalysator VK 2 aus Vergleichsbeispiel 2 versehen und zur besseren Haftung der Beschichtung bei 500°C für die Dauer von 2 Stunden an Luft kalziniert. Anschließend wurde eine weitere Materialzone bestehend aus einem mit Eisen ausgetauschten Zeolithen entsprechend VK 1 aus Vergleichsbeispiel 1 aufgebracht. Auf diese Weise wurden zwei erfindungsgemäße Katalysatoren mit vertikaler Materialzonenanordnung entsprechend Figur 3A mit einem Katalysatorvolumen von 0,04 l hergestellt. Beide Katalysatoren wiesen eine Zellzahl von 62 Zellen pro cm$^2$ und eine Wandstärke von 0,17 mm auf. Der wesentliche Unterschied zwischen den beiden erfindungsgemäßen Katalysatoren bestand in dem in der nachstehenden Tabelle angegebenem Mengenverhältnis der Materialzonen.

| Katalysator: | Mengenverhältnis [untere Materialzone : obere Materialzone] |
|---|---|
| V1: | [5 : 16] |
| V2: | [16 : 5] |

Bei einer solchen Anordnung der Materialzonen diffundiert das zu reinigende Abgas zunächst durch die aus mit Eisen ausgetauschtem Zeolith bestehende Materialzone, die sich durch ein Umsatzprofil bei höheren Temperaturen auszeichnet. Dort erfolgt die SCR-Reaktion bei Betriebstemperaturen oberhalb von 350°C. Nach Durchdringen dieser oberen Materialzone wird die unten liegende, den mit Kupfer ausgetauschten Zeolithen enthaltende Schicht erreicht, in der gegebenenfalls nicht umgesetzte Stickoxide mit nicht umgesetztem Ammoniak reagieren. Dies erfolgt insbesondere dann, wenn die Betriebstemperaturen des Katalysators noch unterhalb von 350°C liegen.

Das Umsatzprofil der beiden erfindungsgemäßen Katalysatoren wurde im frisch hergestellten Zustand in einem stationären Modellgastest untersucht. Die gewählten Testbedingungen entsprachen genau den in Vergleichsbeispiel 1 aufgeführte Bedingungen. Figur 4 zeigt das Ergebnis der Untersuchung.

Beide erfindungsgemäße Katalysatoren weisen ein breiteres oder einen größeren Bereich des Zielarbeitsfensters abdeckendes Umsatzprofil auf als die Vergleichskatalysatoren aus den Vergleichsbeispielen 1 und 2. V1 zeigt mit einem $T_{50}$-Wert von 180°C einen etwas langsameren Anstieg des Stickoxid-Umsatzes im Tieftemperaturbereich als V2 mit $T_{50}$ von 160°C. Die maximale Konvertierung liegt für V1 bei 290°C mit 76 %, für V2 bei 240°C mit 78 % Konvertierung. Die sich daraus ergebenden oberen Grenzen des Umsatzbereiches von 68 % Konvertierung für V1 bzw. 70 % Konvertierung für V2 liegen bei 490°C (V1) bzw. 425°C (V2). Ein $N_2O$-Gehalt nach Katalysator von mehr als 25 ppm wird nicht beobachtet.

Aus dem gemessenen Daten ergibt sich für V1 das mit (|||) schraffierte Umsatzprofil von 180°C bis 490°C. Das durch (≡) gekennzeichnete Umsatzprofil von V2 umfaß den Temperaturbereich 160°C bis 425°C.

Im Vergleich zu den gewählten Vergleichskatalysatoren aus den beiden Vergleichsbeispielen, die den gegenwärtigen Stand der Technik repräsentieren, zeigten beide erfindungsgemäße Katalysatoren ein deutlich zu tieferen Temperaturen hin verschobenes bzw. erweitertes Umsatzprofil. Gegenüber VK2 wird eine signifikante Verbreiterung des Umsatzprofils erreicht. Gegenüber VK1 erreicht V1 eine Verbreiterung des Umsatzprofils im gemessenen und für die Anwendung relevanten Temperaturbereich.

Zusätzlich zum Umsatzprofil im frisch hergestellten Zustand wurde für diese beiden Katalysatoren das Leistungsverhalten nach hydrothermaler Alterung untersucht. Dazu wurden die Katalysatoren V1 und V2 einer synthetischen Alterung in einem auf 700°C aufgeheizten Ofen, in dem eine Atmosphäre bestehend aus 10 % Sauerstoff und 10 % Wasserdampf in Stickstoff herrschte, für die Dauer von 48 Stunden unterzogen. Anschließend wurden die beiden Katalysatoren erneut unter den in Vergleichsbeispiel 1 genannten Bedingungen an der Modellgasanlage getestet. Zum Vergleich mit herkömmlichen SCR-Katalysatoren wurde VK1 derselben Behandlung und Testung unterzogen. Das Ergebnis ist in Figur 5 dargestellt.

Die erfindungsgemäßen Katalysatoren zeigen nach hydrothermaler Alterung erwartungsgemäß erhebliche Einbußen im Stickoxid-Umsatz insbesondere unterhalb von 350°C. Dieses Verhalten ist von herkömmlichen SCR-Katalysatoren, wie VK1 zeigt, bekannt und stellt ein allgemeines, bislang noch ungelöstes Problem dar. Der beobachtete Leistungseinbruch der erfindungsgemäßen Katalysatoren ist allerdings erheblich stärker als bei konventionellen Katalysatoren. Dies ist auf negative Wechselwirkungen zwischen den beiden Materialzonen zurückzuführen, vermutlich auf eine unkontrollierte Wanderung von Übergangsmetallatomen, die sich selektivitätszerstörend auswirkt. Eine solche Wechselwirkung läßt sich durch eine Verkleinerung der Kontaktflächen zwischen den Materialzonen erheblich minimieren.

Demzufolge ist eine horizontale Anordnung der Materialzonen insbesondere dann die bevorzugte Ausgestaltung der Erfindung, wenn die Katalysatoren bei sehr hohen Temperaturen und Wasserdampfgehalten im Abgas eingesetzt werden sollen.

## Patentansprüche

1. Strukturierter SCR-Katalysator zur Reduktion von Stickoxiden im mageren Abgas von Verbrennungsmotoren unter Verwendung von Ammoniak oder einer zu Ammoniak zersetzlichen Verbindung als Reduktionsmittel, der sich zusammensetzt aus mehreren katalytisch aktiven Materialzonen, die auf einem gegebenenfalls katalytisch inerten Tragkörper aufgebracht sind und welche vom Abgas zeitlich nacheinander kontaktiert werden, wobei die Materialzonen übereinander angeordnet sind und wobei die obere Schicht die vom zu reinigenden Abgas zuerst kontaktierte Schicht ist und wobei sich die Materialzonen durch verschiedene Umsatzprofile der SCR-Reaktion auszeichnen, wobei das Umsatzprofil der vom zu reinigenden Abgas zuerst kontaktierten Materialzone bei höheren Temperaturen liegt als das Umsatzprofil der vom zu reinigenden Abgas nachgeordnet kontaktierten Materialzone,
**dadurch gekennzeichnet,**
**dass** die vom zu reinigenden Abgas zuerst kontaktierte Zone aus Eisen-ausgetauschten Zeolithen besteht und die vom zu reinigenden Abgas nachgeordnet kontaktierte Materialzone einen Übergangsmetall-ausgetauschten Zeolithen enthält und das im Zeolithen enthaltene Übergangsmetall Kupfer ist und
**dadurch gekennzeichnet,**
**dass** er kein Platingruppenmetall enthält und
wobei das Umsatzprofil das optimale Arbeitstemperaturfenster eines SCR-Katalysators in frisch hergestelltem Zustand bezeichnet und eine untere Temperaturgrenze und eine obere Temperaturgrenze aufweist,
wobei die untere Temperaturgrenze die Temperatur ist, bei der 50% der für den Katalysator charakteristischen Maximalkonvertierung erreicht werden und die obere Temperaturgrenze die Temperatur ist, bei der 90% der für den Katalysator charakteristischen Maximalkonvertierung unterschritten werden, wobei das Umsatzprofil eingeschränkt ist, wenn der nach Katalysator gemessene $N_2O$-Gehalt eine kritische Grenze überschreitet, die 25ppm beträgt,
wobei die Umsatzprofile der SCR-Reaktion der Materialzonen bestimmt sind in einem stationären Test an einer Modellgasanlage mit folgenden Gaskonzentrationen

| Modellgaskomponente: | Konzentration |
|---|---|
| NO | 500 ppm |
| $NH_3$ | 425 ppm |
| $O_2$ | 5 Vol% |
| $H_2O$ | 1.3 Vol% |
| $N_2$ | Rest |

einem Alpha-Wert (Molverhältnis von Ammoniak zu den Stickoxiden) von $\alpha = 0,85$ und einer Raumgeschwindigkeit von 30.000 $h^{-1}$ und
wobei das Umsatzprofil der zuerst vom Abgas kontaktierten Materialzone zwischen 350°C und 500°C und das Umsatzprofil der vom Abgas nachgeordnet kontaktierten Materialzone zwischen 200°C und 350°C liegt.

**2.** Strukturierter SCR-Katalysator nach Anspruch 1,
**dadurch gekennzeichnet,**
**dass** die vom zu reinigenden Abgas nachgeordnet kontaktierte Materialzone zwischen der oberen Schicht und einem als Tragkörper verwendeten Wabenkörper angeordnet ist.

**3.** Strukturierter SCR-Katalysator nach Anspruch 1,
**dadurch gekennzeichnet,**
**dass** die vom zu reinigenden Abgas nachgeordnet kontaktierte Materialzone identisch mit einem als Tragkörper verwendeten Wabenkörper ist.

**4.** Strukturierter SCR-Katalysator nach Anspruch 2 oder 3,
**dadurch gekennzeichnet,**
**dass** zwischen den Materialzonen eine weitere Beschichtung angeordnet ist, die gegenüber den Übergangsmetallatomen als Diffusionsbarriere wirkt.

**5.** Strukturierter SCR-Katalysator nach Anspruch 4,
**dadurch gekennzeichnet,**
**dass** die Beschichtung überwiegend nicht ausgetauschte Zeolithe ("H-Zeolithe") oder Ammonium-ausgetauschte Zeolithe oder Kombinationen davon enthält.

**6.** Abgasreinigungsanlagen enthaltend einen strukturierten SCR-Katalysator nach einem der Ansprüche 1 bis 5.

**7.** Verwendung eines strukturierten SCR-Katalysators nach einem der Ansprüche 1 bis 5 zur Entfernung von Stickoxiden aus mageren Abgasen von Verbrennungsmotoren unter Verwendung von Ammoniak oder einer zu Ammoniak zersetzlichen Verbindung als Reduktionsmittel.

**Claims**

**1.** Structured SCR catalyst for the reduction of nitrogen oxides in the lean exhaust gas from internal combustion engines using ammonia or a compound which can be decomposed into ammonia as reducing agent, which is composed of several catalytically active material zones which have been applied to an if appropriate catalytically inert support body and are contacted in succession by the exhaust gas, where the material zones are arranged above one another and the upper layer is the layer which is contacted first by the exhaust gas to be purified and wherein the material zones are distinguished by differing conversion profiles of the SCR reaction, wherein the conversion profile of the material zone contacted first by the exhaust gas to be purified is at higher temperatures than the conversion profile of the material zone contacted subsequently by the exhaust gas to be purified,
**characterized in that**
the zone which is contacted first by the exhaust gas to be purified consists of iron-exchanged zeolites,
and the material zone which is subsequently contacted by the exhaust gas to be purified contains a transition metal-exchanged zeolite, and the transition metal contained in the zeolite is copper, and
**characterized in that**
it does not contain any platinum group metal, and
wherein the conversion profile denotes the optimal operating temperature window of an SCR catalyst in a freshly prepared state and has a lower temperature limit and an upper temperature limit,
wherein the lower temperature limit is the temperature at which 50% of the maximum conversion characteristic of the catalyst is reached, and the upper temperature limit is the temperature at which 90% of the maximum conversion characteristic of the catalyst is undershot, wherein the conversion profile is limited if the $N_2O$ content measured downstream of the catalyst exceeds a critical limit, which is 25 ppm,
wherein the conversion profiles of the SCR reaction of the material zones are determined in a stationary test on a model gas unit using the following gas concentrations

| Model gas component: | Concentration: |
|---|---|
| NO | 500 ppm |
| $NH_3$ | 425 ppm |
| $O_2$ | 5 vol% |

(continued)

| Model gas component: | Concentration: |
|---|---|
| $H_2O$ | 1.3 vol% |
| $N_2$ | Remainder |

an alpha value (molar ratio of ammonia to the nitrogen oxides) of $\alpha$ = 0.85 and a space velocity of 30,000 $h^{-1}$, and wherein the conversion profile of the material zone contacted first by the exhaust gas is between 350 °C and 500 °C, and the conversion profile of the material zone contacted subsequently by the exhaust gas is between 200 °C and 350 °C.

2. Structured SCR catalyst according to claim 1,
   **characterized in that**
   the material zone which is contacted subsequently by the exhaust gas to be purified is arranged between the upper layer and a honeycomb body used as a support body.

3. Structured SCR catalyst according to claim 1,
   **characterized in that**
   the material zone which is contacted subsequently by the exhaust gas to be purified is identical to a honeycomb body used as a support body.

4. Structured SCR catalyst according to claim 2 or 3,
   **characterized in that**
   a further coating which acts as diffusion barrier to the transition metal atoms is arranged between the material zones.

5. Structured SCR catalyst according to claim 4,
   **characterized in that**
   the coating contains predominantly non-exchanged zeolites ("H-zeolites") or ammonium-exchanged zeolites or combinations thereof.

6. Exhaust gas purification units containing a structured SCR catalyst according to any of claims 1 to 5.

7. Use of a structured SCR catalyst according to any of claims 1 to 5 for the removal of nitrogen oxides from lean exhaust gases from internal combustion engines using ammonia or a compound which can be decomposed into ammonia as reducing agent.

**Revendications**

1. Catalyseur SCR structuré destiné à réduire les oxydes d'azote dans les gaz d'échappement pauvres de moteurs à combustion interne en utilisant comme agent de réduction de l'ammoniac ou un composé qui peut être décomposé en ammoniac, le catalyseur étant constitué de l'assemblage de plusieurs zones de matériau catalytiquement actif appliquées sur un corps de support éventuellement inerte sur le plan catalytique et mises en contact successivement avec les gaz d'échappement, les zones de matériau étant disposées les unes au-dessus des autres et la couche supérieure étant la zone de matériau qui entre en premier en contact avec le gaz d'échappement à épurer, et dans lequel les zones de matériau sont **caractérisées par** différents profils de conversion de la réaction SCR, et où le profil de conversion de la première zone de matériau qui entre en contact avec les gaz d'échappement à épurer atteint des températures plus élevées que le profil de conversion de la zone de matériau entrant en contact avec les gaz d'échappement à épurer qui est placée en aval
   **caractérisé en ce**
   **que** la première zone en contact avec les gaz d'échappement à épurer est constituée d'une zéolithe dont certains ions ont été remplacés par des ions de fer,
   et **que** la zone de matériau mise en contact en aval avec les gaz d'échappement à épurer contient une zéolithe dont certains ions ont été remplacés par des ions de métal de transition, et le métal de transition contenu dans la zéolithe est le cuivre, et
   **caractérisé en ce**

**qu'**il ne contient aucun métal du groupe du platine et

dans lequel le profil de conversion désigne la fenêtre de température de travail optimale d'un catalyseur SCR à l'état tel qu'il vient d'être fabriqué et ayant une limite de température inférieure et une limite de température supérieure, dans lequel la limite de température inférieure est la température à laquelle 50 % de la conversion maximale caractéristique du catalyseur peut être obtenue, et la limite de température supérieure est la température à laquelle 90 % de la conversion maximale caractéristique du catalyseur peut être obtenue, dans lequel le profil de conversion est limité lorsque la teneur en $N_2O$ mesurée par le catalyseur dépasse un certain seuil critique qui atteint 25 ppm, dans lequel les profils de conversion de la réaction SCR des zones de matériau sont déterminés dans un essai à l'arrêt sur un système de gaz modèle avec les concentrations de gaz suivantes :

| Composant de gaz modèle : | Concentration |
|---|---|
| NO | 500 ppm |
| $NH_3$ | 425 ppm |
| $O_2$ | 5 % en vol. |
| $H_2O$ | 1,3 % en volume, |
| $N_2$ | Reste |

j une valeur alpha (rapport molaire de l'ammoniac aux oxydes d'azote) de $\alpha$ = 0,85 et une vitesse spatiale de 30 000 h$^{-1}$ et

dans lequel le profil de conversion de la première zone de matériau en contact avec les gaz d'échappement est compris entre 350 °C et 500 °C et le profil de conversion de la zone de matériau en aval en contact avec les gaz d'échappement est compris entre 200 °C et 350 °C.

2. Catalyseur SCR structuré selon la revendication 1,
**caractérisé en ce**
**que** la zone de matériau mise en contact en second lieu avec les gaz d'échappement à épurer est disposée entre la couche supérieure et un corps en nid d'abeilles utilisé comme corps de support.

3. Catalyseur SCR structuré selon la revendication 1,
**caractérisé en ce**
**que** la zone de matériau mise en contact en second lieu avec les gaz d'échappement à épurer est identique à un corps en nid d'abeilles utilisé comme corps de support.

4. Catalyseur SCR structuré selon les revendications 2 ou 3,
**caractérisé en ce**
**qu'**un autre revêtement qui joue le rôle d'une barrière à la diffusion vis-à-vis des atomes de métaux de transition est disposé entre les zones de matériau.

5. Catalyseur SCR structuré selon la revendication 4,
**caractérisé en ce**
**que** le revêtement contient principalement des zéolithes sans remplacement d'ions (zéolithes H), ou des zéolithes dont certains ions ont été remplacés par des ions ammonium ou leurs combinaisons.

6. Installation d'épuration de gaz d'échappement contenant du catalyseur SCR structuré selon l'une des revendications 1 à 5.

7. Utilisation d'un catalyseur SCR structuré selon l'une des revendications 1 à 5 pour éliminer les oxydes d'azote des gaz d'échappement pauvres de moteurs à combustion interne en utilisant comme agent de réduction de l'ammoniac ou un composé qui se décompose en ammoniac.

**Figur 1**

**Figur 2**

**Figur 3**

**Figur 4**

**Figur 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0385164 B1
- US 4961917 A
- EP 1495804 A
- US 6914026 B
- US 20060039843 A
- WO 0029728 A
- WO 2006022214 A
- DE 10360955 A1
- DE 10360955
- EP 0393905 A
- US 5409671 A